# FASCICULE DE BREVET EUROPEEN

(11) **EP 0 418 131 B1**
(45) Date de publication et mention de la délivrance du brevet: **18.11.1993**
(21) Numéro de dépôt: 90402476.7
(22) Date de dépôt: 10.09.1990
(51) Int. Cl.: E05C 19/00, B64G 1/66

(54) **Système de verrouillage à came**
Verschlussvorrichtung mit einer Auflaufzunge
Latch system working with a cam

(30) Priorité: 12.09.1989 FR 8911898
(43) Date de publication de la demande: 20.03.1991
(73) Titulaire: AEROSPATIALE Société Nationale Industrielle, 75781 Paris Cédex 16 (FR)
(72) Inventeur: Geyer, Freddy, F-83440 Tanneron (FR); Vezain, Gérard, F-06210 Mandelieu (FR); Scheffter, Jean-Pierre, 11 Hameau des Oliviers, F-06370 Mouans-Sartoux (FR)
(74) Mandataire: Bonnetat, Christian

(56) Documents cités:
- EP-A- 0 146 996
- FR-A- 971 458
- GB-A- 17 149
- GB-A- 1 242 639
- US-A- 2 143 575

## Description

La présente invention a pour objet un système de verrouillage à came pour deux éléments, particulièrement destiné à verrouiller et déverrouiller rapidement lesdits éléments dans des conditions et des ambiances difficiles, telles que celles qui sont imposées sous l'eau ou dans l'espace (et notamment à l'extérieur des véhicules spatiaux). Un tel système de verrouillage permet de relier l'une à l'autre deux pièces respectivement rendues solidaires desdits éléments.

L'invention est destinée à simplifier au maximum les manoeuvres à effectuer par un opérateur, ainsi qu'à réduire au maximum l'énergie nécessaire au verrouillage et au déverrouillage desdits éléments (et donc desdites pièces qui en sont solidaires), tout en procurant un verrouillage sans jeu, insensible aux variations de température et ne nécessitant aucune lubrification.

On remarquera que le document US-A-2 143 575 décrit un système de verrouillage comprenant deux éléments liés mécaniquement l'un à l'autre de façon à ne pas pouvoir s'écarter, ainsi qu'une came montée rotative sur le premier desdits éléments et présentant une surface de contact venant presser une face d'appui portée par le second desdits éléments, dans lequel :
- ladite came peut tourner autour d'un moyeu monté rotatif sur ledit premier élément autour d'un axe de rotation ;
- des moyens élastiques sont prévus pour faire tourner ladite came dans un premier sens tel que ladite surface de contact se déplace vers ladite face d'appui ; et
- des moyens sont prévus pour pouvoir faire tourner ledit moyeu autour dudit axe de rotation, dans un second sens opposé au premier.

La présente invention concerne un système de verrouillage de ce type, caractérisé :
- en ce que ladite surface de contact de ladite came présente au moins approximativement un profil en forme de spirale logarithmique, alors que ladite face d'appui est plane ;
- en ce que l'origine de ladite spirale logarithmique se trouve sur l'axe dudit moyeu ;
- en ce que l'axe de rotation dudit moyeu est excentré, à l'opposé de ladite surface de contact de ladite came, par rapport à l'axe dudit moyeu ; et
- en ce que ledit moyeu porte un ergot, qui en est solidaire en rotation et qui peut entraîner ladite came en rotation dans ledit second sens, ledit ergot n'empêchant pas la rotation de ladite came dans ledit premier sens sous l'action desdits moyens élastiques.

Ainsi, comme on le verra plus en détail par la suite, grâce à la coopération desdites faces de contact et d'appui, on obtient un verrouillage spontanément irréversible, donc facilement verrouillable avec un faible effort. De plus, grâce au montage excentrique de la came, le système de verrouillage de l'invention est également facilement déverrouillable.

On remarquera que ladite face de contact de la came peut ne pas être rigoureusement en forme de spirale logarithmique, à condition que la courbe d'approximation de cette spirale soit telle que les propriétés géométriques rappelées ci-après soient respectées par ladite courbe d'approximation.

Il est avantageux que le second desdits éléments comporte des moyens de rétraction destinés à repousser momentanément ladite came à l'encontre de l'action desdits moyens élastiques, lorsque lesdits éléments sont rapprochés l'un de l'autre et que la surface de contact de ladite came s'appuie sur ladite face d'appui dudit second élément par encliquetage spontané sous l'action desdits moyens élastiques, après avoir échappé auxdits moyens de rétraction, pour verrouiller lesdits éléments.

De préférence, la position rapprochée de verrouillage desdits éléments est déterminée par un système de butée. De même, la position extrême que peut prendre ladite came sous l'action desdits moyens élastiques peut être délimitée par une butée.

Afin de simplifier le rapprochement relatif desdits éléments, il est avantageux que lesdits premier et second éléments soient articulés l'un à l'autre à leurs extrémités respectivement opposées à ladite came et à ladite face d'appui, autour d'un axe parallèle à l'axe de rotation de ladite came.

Cette articulation desdits premier et second éléments peut constituer une liaison non démontable entre ceux-ci.

Au contraire, dans une variante de réalisation, l'articulation desdits premier et second éléments peut former une liaison démontable.

Dans l'un ou l'autre de ces deux cas, afin de permettre un rattrapage de jeu automatique, il est préférable que l'articulation entre lesdits premier et second éléments soit constituée par un arbre fixe solidaire d'un élément et par des surfaces de palier en V solidaire de l'autre élément.

Afin d'obtenir le positionnement relatif, avec rattrapage de jeu et reprise des efforts, desdits éléments transversalement audit axe de rotation, l'un des éléments est solidaire de surfaces d'appui en V de direction orthogonale audit axe de rotation entre lesdits éléments, tandis que l'autre élément comporte une butée susceptible de venir en appui contre lesdites surfaces d'appui en V lorsque lesdits éléments sont en position rapprochée.

Dans un mode de réalisation avantageux de la présente invention, ledit système de butée délimitant la position rapprochée des deux éléments est prévu pour délimiter plusieurs positions rapprochées différentes des deux éléments, ledit second élément comporte plusieurs moyens de rétraction et plusieurs faces d'appui distinctes et, pour chaque position rapprochée, ladite came est en appui par sa face de contact contre l'une desdites faces d'appui.

Les figures du dessin annexé feront bien comprendre comment l'invention peut être réalisée. Sur ces figures, des références identiques désignent des éléments semblables.

La figure 1 est un diagramme schématique expliquant les propriétés de la came utilisée dans la présente invention.

Les figures 2 à 12 sont des diagrammes illustrant le fonctionnement d'un système de verrouillage pourvu de la came de la figure 1.

La figure 13 illustre, en coupe longitudinale schématique, un premier exemple de réalisation de l'invention, les deux éléments à verrouiller n'étant pas encore assemblés.

La figure 14 est une vue partielle, en perspective, montrant les deux éléments du système de la figure 13, ceux-ci étant dans leur position relative illustrée par la figure 13.

La figure 15 est une vue schématique, avec arrachement partiel, illustrant le montage en rotation de la came du système des figures 13 et 14.

La figure 16 est une coupe à échelle agrandie, transversale à l'axe de rotation de ladite came, et montrant de façon plus précise le montage de celle-ci sur son axe.

Les figures 17 et 18 illustrent, en coupe longitudinale schématique, le processus de verrouillage spontané des deux éléments de la figure 13.

La figure 19 est une vue de dessus partielle montrant les deux éléments dans leur position de verrouillage spontané.

Les figures 20 et 21 illustrent, en coupe longitudinale schématique, le déverrouillage des éléments de la figure 13.

La figure 22 illustre, en coupe longitudinale schématique, un second mode de réalisation de l'invention, les deux éléments à verrouiller étant solidaires l'un de l'autre autour d'un arbre de rotation.

Les figures 23 à 27 et 29 illustrent, en vues semblables à la figure 22, le fonctionnement du système de cette dernière figure.

La figure 28 est une vue en plan du système de la figure 22, dans sa position illustrée par la figure 27 et selon la ligne XXVIII-XXVIII de cette dernière figure.

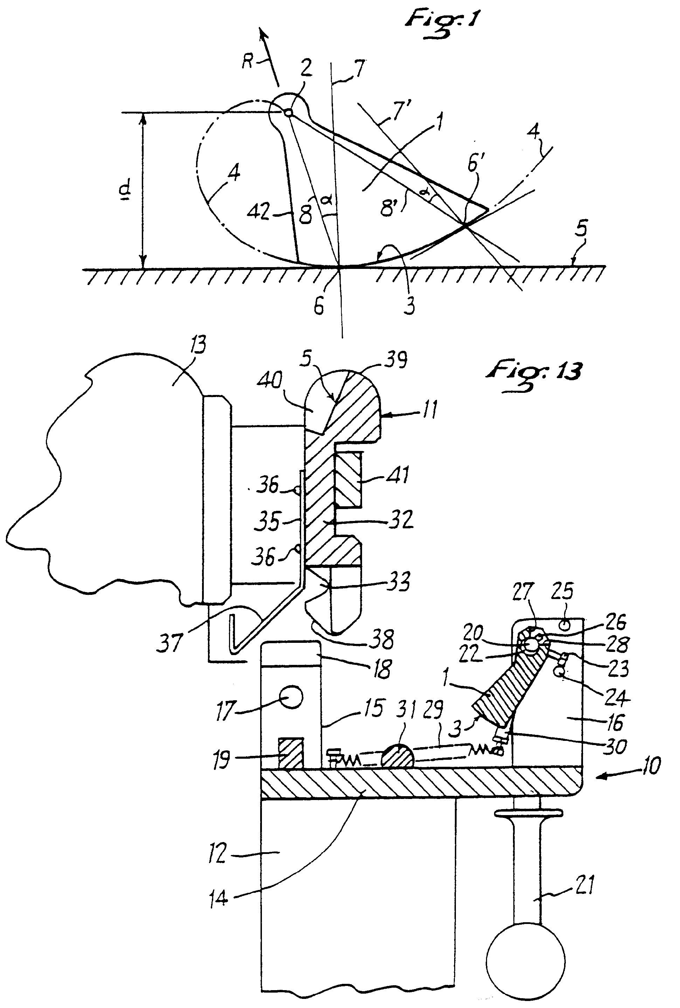

Sur la figure 1, on a représenté une came plate 1, qui est susceptible de tourner autour d'un axe 2 orthogonal à son plan et dont la face de contact 3 est une portion d'une spirale logarithmique 4 dont l'origine se trouve sur l'axe 2. La came 1 est en appui sur une surface plane 5, au point 6.

Comme on le sait, l'une des caractéristiques d'une telle spirale logarithmique est que l'angle formé entre la normale 7,7' en un point de la spirale et le rayon 8,8' passant par ce point est constant, quel que soit ce point 6,6'. Sur la figure, cet angle est désigné par α.

Par suite, pour la came 1, il en résulte quatre propriétés importantes :
- si l'on détermine la valeur de l'angle α de façon que sa tangente soit inférieure à celle de l'angle de frottement (généralement désigné par φ en mécanique), la réaction R au point d'appui 6 est à l'intérieur du cône de frottement, de sorte que l'équilibre de la came est réalisé par arc-boutement ;
- cet appui stable et irréversible est obtenu quel que soit le point 6 ou 6' de la came 1 qui se trouve au contact de la surface 5 ;
- si, dans un ensemble mécanique, la distance d séparant l'axe de rotation 2 de la surface 5 est variable, par exemple à cause de vibrations, de variations des charges appliquées ou pour des raisons de tolérances de fabrication ou de variations de température, il est possible de compenser ces variations de la distance d et de trouver malgré elles un appui stable et irréversible de la came 1 sur la surface 5, par rotation de celle-ci, puisque les rayons 8,8' ont des longueurs différentes ; et
- si, un appui stable étant obtenu en 6 pour un rayon 8 donné, la came 1 et/ou la surface d'appui 5 sont soumises à des vibrations ou à des variations de charges, le point d'appui stable peut se déplacer en 6', pour un rayon 8' plus grand que le rayon 8, par rotation spontanée de la came ; il devient alors plus difficile de tourner volontairement la came 1 autour de l'axe 2 dans le sens inverse de cette rotation spontanée.

La présente invention met à profit ces particularités.

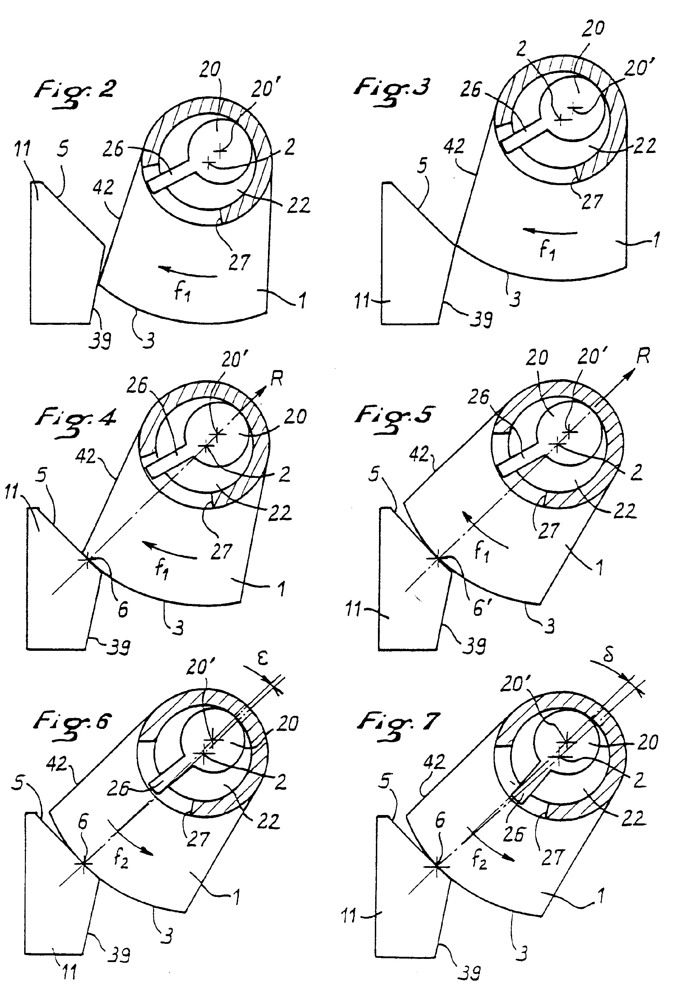

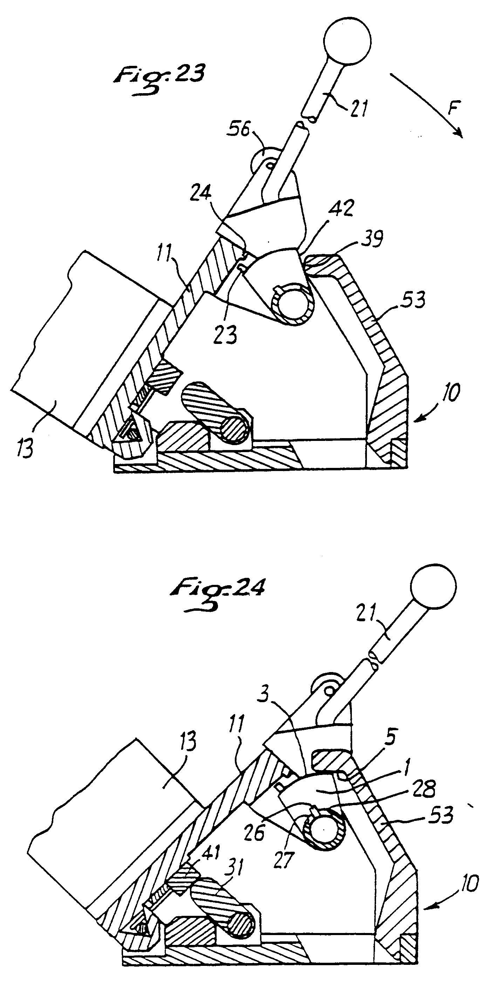

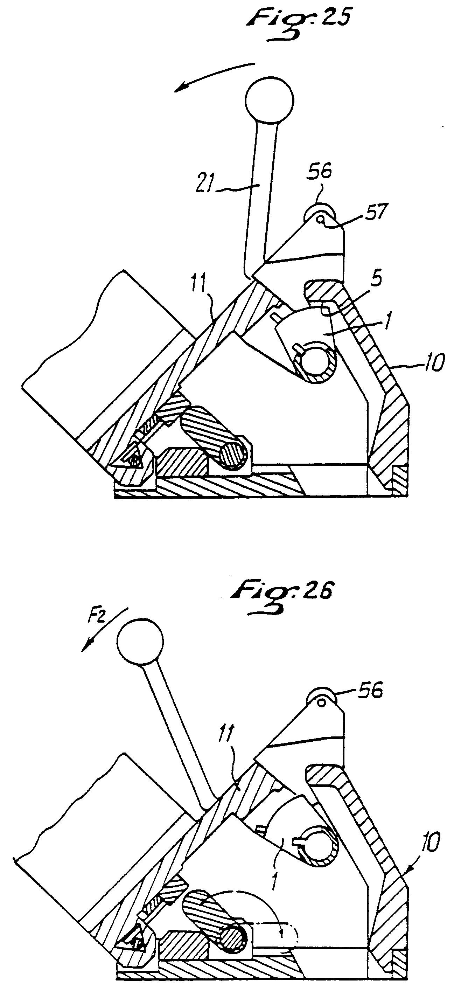

Sur les figures 2 à 12, on retrouve la came 1, son axe de rotation 2, sa face de contact logarithmique 3, ainsi que la surface d'appui plane 5. Plus particulièrement, sur ces figures 2 à 12, le montage de la came 1 est semblable à celui du mode de réalisation illustré par les figures 22 à 29.

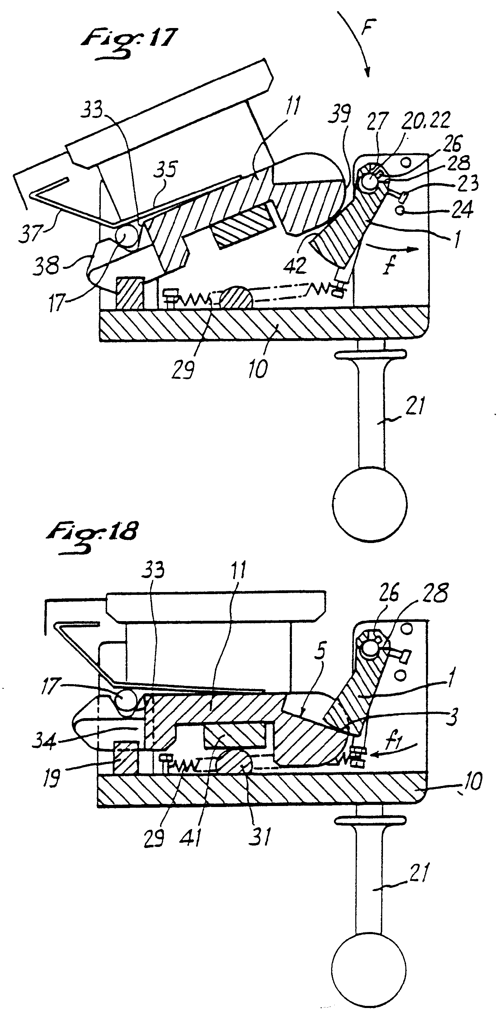

La came 1 est montée rotative autour d'un moyeu 22 d'axe 2, lui-même monté rotatif sur un premier élément 10 (voir les figures 13 à 29) par l'intermédiaire de tourillons d'extrémité 20, comme cela est représenté sur la figure 15. L'axe 9 des tourillons d'extrémité 20 est excentré par rapport à l'axe 2, dans la direction opposée à la face de contact logarithmique 3. La came 1 est pressée dans le sens de la flèche f1 par des moyens élastiques 29,55 (voir les figures 13 à 29), en direction de la surface d'appui plane 5. Celle-ci est solidaire d'un second élément 11, comme cela sera expliqué ci-après.

Un téton 26, solidaire du moyeu 22 et des tourillons d'extrémité 20, peut coopérer avec une face de butée 27 prévue sur ladite came 1.

Par ailleurs, comme il sera décrit ci-après, les éléments 10 et 11 sont liés mécaniquement l'un à l'autre, par exemple en rotation, de façon à ne pas pouvoir s'écarter l'un de l'autre lorsque la face de contact 3 est en appui de verrouillage sur la surface d'appui plane 5.

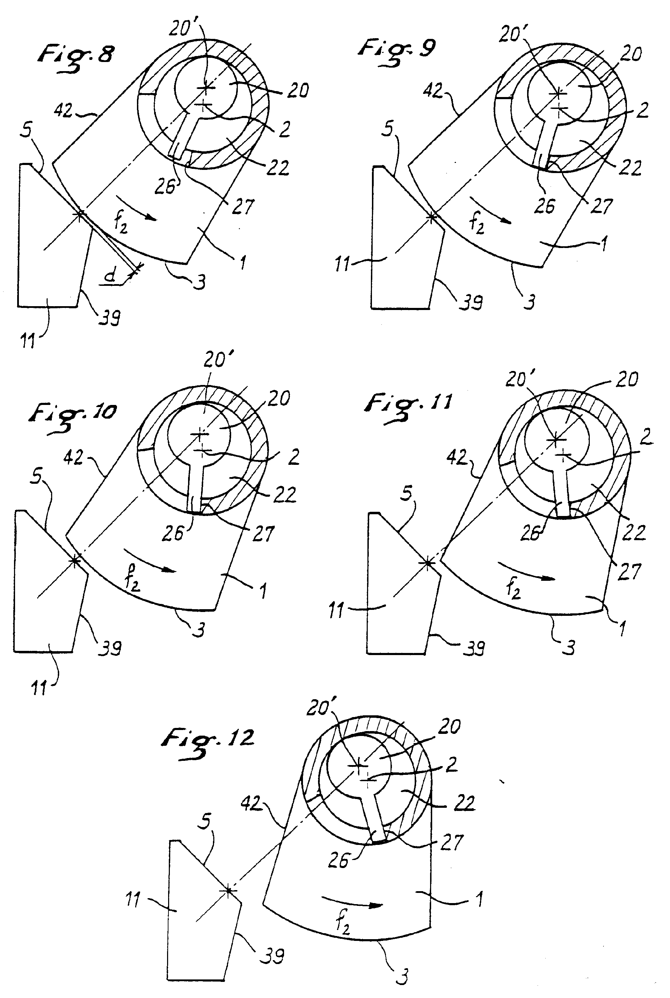

Sur la figure 2, les éléments 10 et 11 sont dans une position relative rapprochée, telle que la face d'extrémité avant 42 de la came 1 est en appui contre la face avant 39 (moyens de rétraction) de l'élément 11. Dans cette position relative, la face 39 empêche les moyens élastiques 29,55 de faire tourner à fond la came 1 dans le sens f1, c'est-à-dire qu'alors lesdits moyens élastiques 29,55 sont bandés. Si l'on déplace les éléments 10 et 11 de façon à tendre à les éloigner l'un de l'autre, la face d'extrémité 32 de la came 1 restant en appui contre la face 39 de l'élément 11, il arrive un moment où la came 1 échappe à l'action de rétraction de ladite face 29 (voir la figure 3). Dès l'échappement, les moyens élastiques 29,55 poussent la came 1 dans le sens f1, de sorte que la face de contact logarithmique 3 vient s'appuyer en 6 contre la surface d'appui plane (voir la figure 4). Si dans cette position, les éléments 10 et 11 sont soumis à des vibrations ou à des variations dimensionnelles (par exemple sous l'effet de la chaleur), la came 1 prend spontanément, sous l'action desdits moyens élastiques 29,55 qui la pressent dans le sens f1, une autre position relative, telle que maintenant le point de contact entre la face 3 et la surface 5 (voir la figure 5) vient en 6'. On voit ainsi que le système selon l'invention est non seulement auto-verrouillable, mais encore présente la tendance à se verrouiller toujours plus. Aussi bien dans la position de la figure 4 que dans celle de la figure 5, la pression de verrouillage de la came 1 sur la face 5 entraîne une déformation élastique des parties en contact desdits éléments 10 et 11. Dans ces deux positions, on choisit la plage de contact entre les faces 3 et 5, pour que la réaction R passe par le point 6 (ou 6') et par l'axe 2 du moyeu 22, ainsi d'ailleurs que par l'axe 20' des tourillons 20.

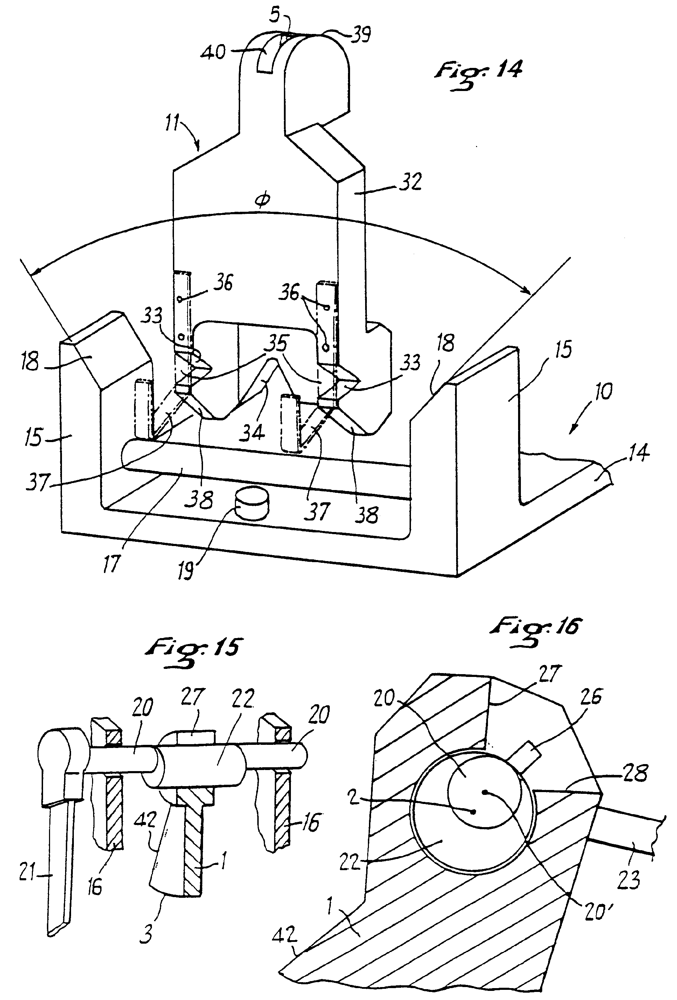

Si, à partir de la position de verrouillage de la figure 4 ou de la figure 5, on désire déverrouiller les deux éléments 10 et 11, on fait tourner volontairement le moyeu 22 et les tourillons 20 autour de l'axe 20' de ces derniers, dans le sens f2, opposé à f1, à l'encontre de l'action des moyens élastiques 29,55 (voir la figure 6). On fait ainsi apparaître un écart angulaire ε entre les deux axes 6-20' et 6-2. On diminue ainsi la pression exercée par la came 1 sur la surface 5, de sorte que la déformation élastique de ces éléments, due à la compression, diminue. Si on continue la rotation du moyeu 22 et des tourillons 20 dans le sens f2 autour de l'axe 20', on diminue encore cette pression jusqu'à l'annuler (voir la figure 7). L'écart angulaire entre les axes 6-20' et 6-2 est devenue δ, avec δ > ε. Une telle rotation dans le sens f2 étant poursuivie, la face 3 se décolle de la surface 5, du fait de l'action de l'excentricité entre les axes 2 et 20' (voir la figure 8 qui fait abstraction de l'action des moyens élastiques 29).

Dans cette position, la came 1 est décollée de l'élément 11, mais n'a pas encore tourné dans le sens f2. La rotation de la came 1 dans le sens f2 ne peut commencer qu'à partir du moment où le téton 26 étant amené au contact de la butée 27 (voir la figure 9), la rotation volontaire du moyeu 22 et des tourillons 20 est poursuivie dans le sens f2 (voir la figure 10). Le téton 26, prenant appui sur la butée 27, repousse alors la came 1 dans le sens f2, en la faisant tourner autour du moyeu 22 (voir la figure 11). La poursuite de cette rotation fait échapper alors la came 1 à la surface d'appui 5 (voir la figure 12). Le décollement d de la came 1 (figure 8) précédant l'appui du téton 26 sur la butée 27 constitue une marge de sécurité.

On comprend ainsi aisément que, grâce à l'invention, on obtient un système de verrouillage autoverrouillable permettant d'obtenir une force de verrouillage importante par la mise en oeuvre d'un effort faible et pouvant par ailleurs être déverrouillé par une action de déverrouillage ne nécessitant que peu d'effort. De plus, il est clair que le système permet le rattrapage de jeu automatique.

Dans le mode de réalisation représenté sur les figures 13 à 20, le système d'assemblage auto-verrouillable selon l'invention permet l'assemblage avec verrouillage réversible de ses deux éléments séparés 10 et 11. Par exemple, l'élément 10 est monté solidaire de la structure 12 d'un vaisseau spatial, du côté extérieur de celui-ci et l'élément 13 est solidaire d'une structure 13 (par exemple une antenne), qui doit être fixée sur ledit vaisseau spatial.

L'élément 10 comporte une platine épaisse indéformable 14 à partir de laquelle se dressent des paires de pattes 13 et 18 disposées à des extrémités opposées de ladite platine (voir également la figure 14). Entre les pattes 15 est monté un arbre fixe 17. La partie supérieure des pattes 15 est conformée en biseaux 18, formant une ouverture (d'angle Φ) divergeant vers l'extérieur pour l'espace compris entre lesdites pattes 15. A l'aplomb de l'arbre fixe 17, en position médiane de celui-ci, est prévu un téton cylindrique 19, solidaire de la platine 10.

A l'extrémité opposée de ladite platine 10, l'arbre rotatif 20 d'axe 20' (voir également les figures 15 et 16) est monté à palier entre les pattes 16. L'arbre rotatif 20 est parallèle à l'arbre fixe 17 et il peut être actionné par une poignée 21. Comme mentionné ci-dessus, la partie médiane 22 de l'arbre rotatif 20 est excentrée par rapport audit arbre, pour former moyeu pour la came 1. Sur cette partie médiane excentrée 22 de l'arbre 20 est montée la came 1 de façon que l'axe 2 de ladite came soit confondu avec l'axe de ladite partie excentrée 22. Ainsi, l'arbre rotatif 20 forme des tourillons d'extrémité excentrés pour le moyeu médian 22.

La rotation de la came 1 par rapport au moyeu 22 est délimitée par une butée 23 solidaire de la came 1 et susceptible de coopérer avec des appuis 24 et 25, solidaires des pattes 16.

Par ailleurs, le téton 26 (non représenté sur la figure 15) solidaire de l'arbre rotatif 20 peut coopérer respectivement avec des faces de butée 27,28 portées par ladite came, de façon que ladite came puisse être tournée par action sur la poignée 21, de la façon indiquée ci-dessus.

Un système de ressort 29 et de bielle 30 tire la came 1 en direction de l'arbre fixe 17. En position désaccouplée des éléments 10 et 11, mis en attente d'accouplement (position représentée sur la figure 13), le système de ressort 29 applique la butée 23 contre l'appui 24, de sorte que la came 1 occupe sa position de basculement extrême d'attente en direction de l'arbre 17, et la poignée 21 occupe une position telle que le téton 26 se trouve entre les faces de butées 27 et 28, par exemple à équidistance de celles-ci.

Une butée 31 est prévue solidaire de la platine 14, entre les paires de pattes 15 et 16.

L'élément 11 comporte également une platine épaisse indéformable 32, dont une extrémité comporte des appuis 33 en forme de V définissant une ligne d'appui transversale à ladite platine, ainsi qu'une encoche 34, également en forme de V, pratiquée dans l'épaisseur de ladite platine. Les positions relatives des appuis 33 et de l'encoche 34 sont telles que l'arbre fixe 17 et le téton 19 peuvent être amenés simultanément et respectivement en appui entre les faces en V desdits appuis 33 et de l'encoche 36. Les appuis en V 33 sont obturés par des lames élastiques 35, solidaires de ladite platine à leur extrémité opposée auxdits appuis, grâce à des vis 36. Les lames élastiques 35 sont prolongées au-delà par des parties recourbées 37, s'écartant de la platine 32. En regard des parties recourbées 37, la platine comporte des biseaux 38 de sens opposé, de sorte qu'entre les parties élastiques recourbées 37 et les biseaux 38 soient formés des vés alignés, définissant une ligne transversale à la platine 32.

A son extrémité opposée, la platine 32 comporte une face arrondie d'extrémité 39, pourvue d'une fente longitudinale 40 dont la largeur est plus grande que l'épaisseur de la came 1 et dont le fond est plan pour constituer la surface d'appui plane 5, destinée à coopérer avec la face de contact logarithmique 3 de ladite came 1. Une butée 41 est prévue sous la platine 32.

Lorsqu'on veut assembler lesdits éléments 10 et 11, on les présente dans la position relative représentée par les figures 13 et 14 et on les rapproche jusqu'à engager l'arbre fixe 17 dans les vés 37,38. On remarquera que cette approche est guidée par lesdits vés, ainsi que par les faces biseautées 18, qui délimitent la position transversale de l'élément 11 par rapport à l'élément 10. Lorsque l'arbre 17 se trouve au contact des vés 37,38, on exerce une faible pression pour que les lames élastiques 35 s'écartent et que ledit arbre fixe puisse pénétrer dans les appuis 33 en forme de V. Après pénétration dudit arbre 17 dans lesdits appuis, les lames élastiques 35 pressent ledit arbre 17 contre les faces en V desdits appuis. On fait ensuite basculer ledit élément 11 autour de l'arbre fixe 17 (voir la flèche F de la figure 17), jusqu'à ce que la partie arrondie d'extrémité 39 vienne au contact d'une face d'extrémité 42 de la came 1.

Si l'on poursuit le mouvement de basculement (flèche F), la partie arrondie d'extrémité 39 repousse ladite came 1 à l'encontre de l'action du système de ressort 29, ladite came basculant autour de l'arbre 20,22 (flèche f). La butée 23 se décolle de l'appui 24 et, la poignée 21 restant fixe, la face 28 se rapproche du téton 26 (voir la position représentée sur la figure 16).

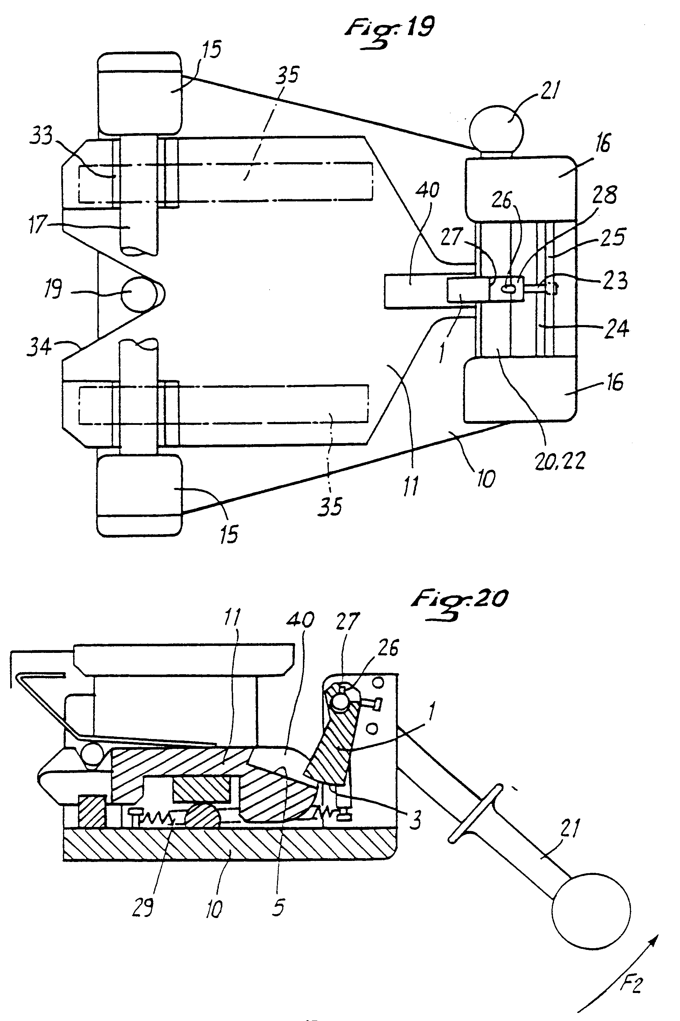

En poursuivant encore plus le mouvement de basculement de l'élément 11 par rapport à l'élément 10, on continue de repousser la came 1 par la partie arrondie d'extrémité 39 de l'élément 11, jusqu'à ce que la fente 40 se trouve en regard de ladite came 1. A ce moment, sous l'action du système de ressort 29, la came 1 échappe à l'action de repoussée de la partie arrondie d'extrémité 39 et pénètre dans la fente 40 (flèche f1), sa face de contact 3 prenant appui sur la surface plane 5 servant de fond à ladite fente 40. Les éléments 10 et 11 se trouvent alors dans la position relative représentée sur les figures 18 et 19, dans laquelle :
- l'arbre fixe 17 est au contact des appuis 33 en forme de V ;
- le téton 19 est au contact des faces en V de l'encoche 34 ;
- les butées 31 et 41 sont au contact l'une de l'autre.

Après l'encliquetage spontané de la came 1 dans la fente 40, les éléments 10 et 11 sont automatiquement verrouillés l'un par rapport à l'autre. On remarquera que la position de verrouillage ainsi atteinte ne dépend que des jeux entre les éléments 10 et 11, qui sont absorbés par la came. De plus, cette position de verrouillage est sûre car la reprise :
- des efforts transversaux à l'arbre fixe 17 est obtenue par la coopération des appuis 33 et dudit arbre fixe 17 ;
- des efforts orthogonaux aux éléments 10 et 11 est réalisée grâce à l'arbre fixe 17, aux appuis 33, à la came 1, à la surface 5 et aux butées 31 et 41 ;
- des efforts parallèles à l'arbre fixe 17 est supportée par le téton 19 et l'encoche 34 ;
- des couples autour d'un axe transversal à l'arbre fixe 17, et autour d'un axe orthogonal aux éléments 10 et 11 est obtenue par l'arbre 17 et les appuis 33 ;
- du couple autour d'un axe parallèle à l'arbre fixe 17 est assurée par les butées 31,41, la came 1, et la surface 5.

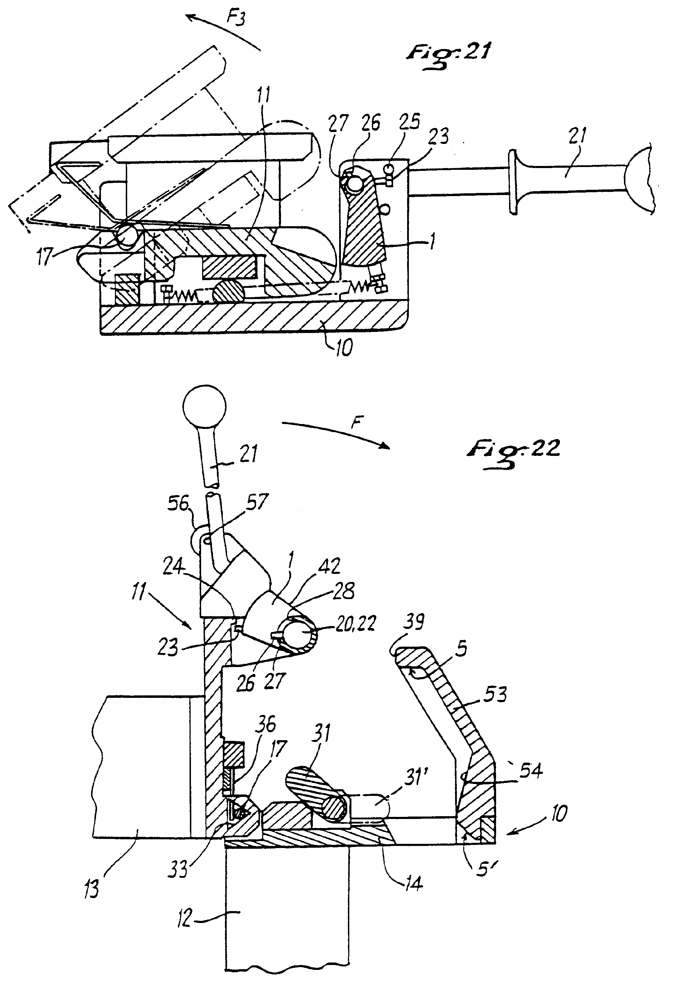

Si, à partir de la position de verrouillage optimale ainsi obtenue, on désire déverrouiller les éléments 10 et 11, il suffit d'agir sur la poignée 21, pour la tourner dans le sens F2 (voir la figure 20) inverse du sens F. Par cette rotation, grâce au système d'excentrique 20,22, la came 1 est d'abord soulevée, sa face de contact 3 étant écartée de la surface d'appui 5, comme cela a été expliqué en regard des figures 8 et 9, ce qui effectue le déverrouillage. Ensuite, la rotation de la poignée 21 étant poursuivie dans le sens F2, la butée 26 arrive au contact de la face 27, de sorte que la came 1 est sortie de la fente 40, à l'encontre de l'action du système de ressort 29. Lorsque la butée 23 arrive au contact de l'appui 25 (voir la figure 21), l'élément 11 est complètement déverrouillé de l'élément 10. Il peut alors se désassembler par rotation de sens F3 (inverse de F) autour de l'arbre fixe 17, puis par dégagement dudit arbre fixe 17 des appuis 33 en forme de V. Les éléments 10 et 11 se retrouvent alors dans la position relative montrée par la figure 13. La poignée 21 peut, par rotation de sens F1, être ramenée de la position représentée sur la figure 20 à celle représentée sur la figure 13, de façon à libérer la came 1, qui reprend sa position d'attente. L'élément 10 est alors prêt pour une autre opération d'assemblage-verrouillage, telle que décrite ci-dessus.

On voit ainsi que, grâce à l'invention, la position de verrouillage ne dépend que des jeux et non pas de la position de la poignée 21 et que le déverrouillage s'effectue à partir de n'importe quelle position relative de la came 1 par rapport à la surface d'appui 5.

Dans la variante de réalisation du système selon l'invention illustrée par les figures 22 à 29, on retrouve les mêmes éléments que dans le mode de réalisation des figures 13 à 21, mais avec les modifications suivantes :
- l'arbre fixe d'articulation 17, solidaire de l'élément 10 est monté prisonnier dans l'élément 11, de sorte que lesdits éléments 10 et 11 ne sont plus démontables ;
- la came logarithmique 1, l'arbre de commande 20,22, le téton 23, l'appui 24 et la poignée 21 sont montés sur l'élément 11 et non plus sur l'élément 10 ;
- la butée 31, solidaire de l'élément 10, est solidaire d'un ensemble basculant 50 soumis à l'action d'un ressort 51 (voir figure 28), de façon à pouvoir occuper une position 31 ou une position 31' respectivement représentées en trait plein et en trait mixte sur la figure 22 et préétablies en usine. Dans la position 31 de la butée, le ressort 51 est bandé et l'ensemble basculant 50 est maintenu par une goupille 52. Si la goupille 52 est tirée, le ressort 51 fait basculer la butée en position 31';
- l'élément 10 comporte un sabot 53 comportant deux surfaces d'appui 5 et 5' distinctes ;
- les moyens de rétraction de la rampe 1 comportent une extrémité arrondie 39 et un plan incliné 54, respectivement portés par ledit sabot 53 ;
- le téton de centrage et de verrouillage 19 solidaire de la platine 14 est remplacé par un bourrelet 19 solidaire de l'arbre fixe 17 ;
- le système de ressort 29 et la bielle 30 sont remplacés par des ressorts hélicoïdaux 55, montés sur l'arbre 20,22 ;
- un système de sécurité 56, à broche rétractable 57, maintient la poignée 21 en position armée de verrouillage.

Si la butée 31 est dans sa position la plus saillante par rapport à la platine 14 (figures 22 à 26), le fonctionnement est le suivant :

Le système de sécurité 56 maintenant la poignée 21 en position armée de verrouillage, l'élément 11 est basculé autour de l'arbre fixe 17 et basculé dans le sens de la flèche F (figures 22 et 23). Dès que la face extrême 42 de la butée 1 atteint le bord arrondi 39 du sabot 53 (figure 23), ladite came est arrêtée, de sorte que si le basculement de sens F continue, la butée 23 se décolle de son appui 24. Dès franchissement du bord arrondi 39 la face de contact logarithmique 3 de la came 1 prend spontanément appui sous la face d'appui 5 du sabot 53, sous l'action des ressorts 55, tandis que la butée 31 s'appuie entre la butée 41.

Pour déverrouiller les deux éléments 10 et 11 (voir la figure 25), le système de sécurité 56 est actionné, de sorte que la goupille 57 est rétractée et que la poignée 21 peut tourner dans le sens F2, inverse du sens F. Grâce à l'excentricité de l'axe de rotation 2 de la came 1, celle-ci est dégagée de sa face d'appui 5. Le dégagement est complet si l'on poursuit la rotation de la poignée 21 dans le sens F2 (voir la figure 26), de sorte qu'il est alors possible de ramener l'élément 11 dans sa position initiale de la figure 22.

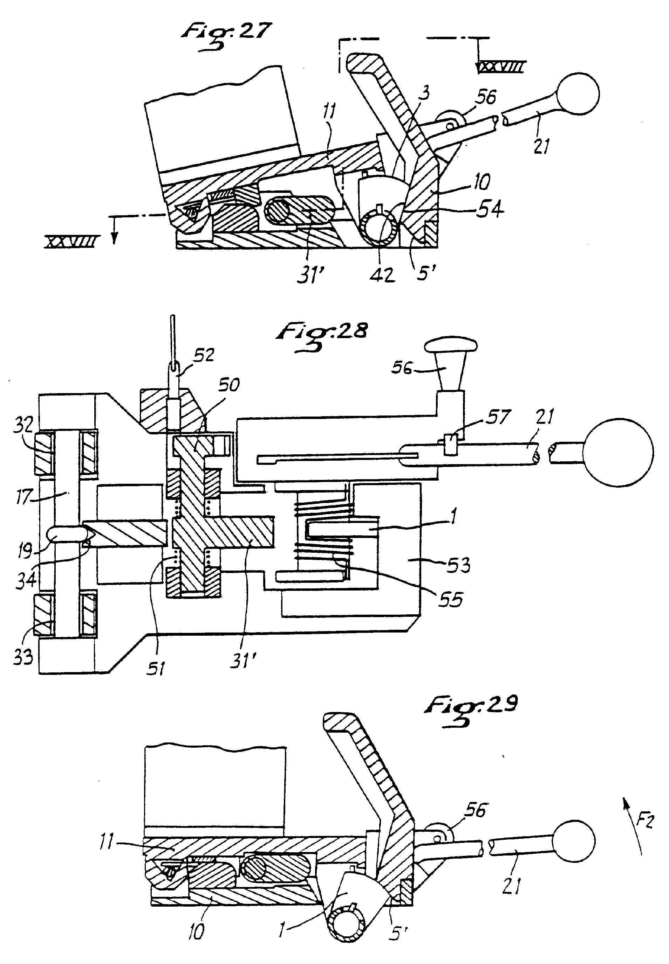

Si au lieu de ramener l'élément 11 dans la position de la figure 22, on rétracte la goupille 52, la butée 31 prend la position la moins saillante 31' sous l'action du ressort 51 et le bord extrême 42 peut venir au contact du plan incliné 54 après réarmement de la poignée 21 (figures 27 et 28). En continuant ce mouvement, on peut ancrer spontanément la face de contact 3 de la came derrière la seconde face d'appui 5' (figure 29). Il est alors possible de déverrouiller les deux éléments 10 et 11 (par rotation de la poignée 21 dans le sens F2 après rétraction de la goupille 57) selon des processus semblables à ceux décrits ci-dessus.

On remarquera qu'à chaque manipulation, les positions extrêmes de la poignée de commande 21 sont figées et en butée franche.

## Revendications

1. Système de verrouillage comprenant deux éléments (10,11) liés mécaniquement l'un à l'autre de façon à ne pas pouvoir s'écarter, ainsi qu'une came (1) montée rotative sur le premier desdits éléments et présentant une surface de contact (3) venant presser une face d'appui (5) portée par le second desdits éléments, dans lequel :
- ladite came peut tourner autour d'un moyeu (22) monté rotatif sur ledit premier élément autour d'un axe de rotation (20') ;
- des moyens élastiques sont prévus pour faire tourner ladite came dans un premier sens (f1) tel que ladite surface de contact se déplace vers ladite face d'appui ;
- des moyens sont prévus pour pouvoir faire tourner ledit moyeu autour dudit axe de rotation, dans un second sens (f2) opposé au premier,
caractérisé :
- en ce que ladite surface de contact (3) de ladite came présente au moins approximativement un profil en forme de spirale logarithmique, alors que ladite face d'appui (5) est plane ;
- en ce que l'origine de ladite spirale logarithmique se trouve sur l'axe dudit moyeu (22) ;
- en ce que l'axe de rotation (20') dudit moyeu (22) est excentré, à l'opposé de ladite surface de contact de ladite came, par rapport à l'axe (2) dudit moyeu ; et
- en ce que ledit moyeu porte un ergot (26), qui en est solidaire en rotation et qui peut entraîner ladite came en rotation dans ledit second sens (f2), ledit ergot n'empêchant pas la rotation de ladite came dans ledit premier sens sous l'action desdits moyens élastiques.

2. Système selon la revendication 1,
caractérisé en ce que le second desdits éléments comporte des moyens de rétraction (39) destinés à repousser momentanément ladite came (1) à l'encontre de l'action desdits moyens élastiques, lorsque lesdits éléments sont rapprochés l'un de l'autre et en ce que la surface de contact de ladite came s'appuie sur ladite face d'appui dudit second élément par encliquetage spontané sous l'action desdits moyens élastiques, après avoir échappé auxdits moyens de rétraction, pour verrouiller lesdits éléments.

3. Système selon l'une des revendications 1 ou 2,
caractérisé en ce que la position rapprochée de verrouillage desdits éléments est déterminée par un système de butée (31).

4. Système selon l'une des revendications 1 à 3,
caractérisé en ce que la position extrême que peut prendre ladite came sous l'action desdits moyens élastiques est délimitée par une butée (23,24).

5. Système selon l'une des revendications 1 à 4,
caractérisé en ce que lesdits premier et second éléments sont articulés l'un à l'autre à leurs extrémités respectivement opposées à ladite came et à ladite face d'appui, autour d'un axe (17) parallèle à l'axe de rotation de ladite came (1).

6. Système selon la revendication 5,
caractérisé en ce que l'articulation desdits premier et second éléments constitue une liaison non démontable entre ceux-ci.

7. Système selon la revendication 5,
caractérisé en ce que l'articulation desdits premier et second éléments forme une liaison démontable.

8. Système selon l'une quelconque des revendications 5 à 7,
caractérisé en ce que l'articulation entre lesdits premier et second éléments est constituée par un arbre fixe (17) solidaire d'un des éléments et par des surfaces de palier en V (33) solidaires de l'autre élément.

9. Système selon l'une quelconque des revendications 5 à 8,
caractérisé en ce que l'un des éléments est solidaire de surfaces d'appui en V (34) de direction orthogonale à l'axe de rotation entre lesdits éléments, tandis que l'autre élément comporte une butée (19) en appui contre lesdites surfaces d'appui en V lorsque lesdits éléments sont en position rapprochée.

10. Système selon l'une quelconque des revendications 3 à 9,
caractérisé en ce que ledit système de butée (31,41) est prévu pour délimiter plusieurs positions rapprochées différentes des deux éléments, en ce que ledit second élément comporte plusieurs moyens de rétraction (39,54) et plusieurs faces d'appui (5,5') distinctes et en ce que, pour chaque position rapprochée, ladite came est en appui par sa face de contact contre l'une desdites faces d'appui.

## Patentansprüche

1. Verriegelungssystem mit zwei Elementen (10, 11), die mechanisch miteinander verbunden sind, so daß sie sich nicht trennen können, sowie einem Nocken (1), der drehbar auf dem ersten der besagten Elemente montiert ist und eine Kontaktfläche (3) aufweist, die auf eine durch die zweite der besagten Flächen getragene Stützfläche (5) drückt, in welchem:
- der besagte Nocken um eine Nabe (22) drehen kann, die drehbar um eine Rotationsachse (20') auf dem besagten ersten Element montiert ist;
- elastische Mittel vorgesehen sind, um den besagten Nocken in einer ersten Richtung (f1) zu drehen, so daß die besagte Kontaktfläche sich gegen die besagte Stützfläche hin bewegt;
- Mittel vorgesehen sind, um besagte Nabe in einer zweiten der ersten Richtung entgegengesetzten Richtung (f2) um die besagte Rotationsachse zu drehen,
dadurch gekennzeichnet,
- daß die besagte Kontaktfläche (3) der besagten Nocke wenigstens annähernd ein Profil in Form einer logarithmischen Spirale aufweist, während die besagte Stützfläche (5) eben ist;
- daß der Ursprung der besagten logarithmischen Spirale sich auf der Achse der besagten Nabe (22) befindet;
- daß die Rotationsachse (20') der besagten Nabe (22) exzentrisch, entgegengesetzt der besagten Kontaktfläche der besagten Nocke in Bezug auf die Achse (2) der besagten Nabe, gelagert ist;
- daß die besagte Nabe einen Vorsprung (26) trägt, der in Drehung fest damit verbunden ist und den besagten Nocken in der Drehung in der besagten zweiten Richtung (f2) mitnehmen kann, wobei der Vorsprung die Drehung des besagten Nockens in die besagte erste Richtung unter der Einwirkung der besagten elastischen Mittel nicht behindert.

2. System nach dem Anspruch 1,
dadurch gekennzeichnet, daß das zweite der besagten Elemente Retraktionsmittel (39) enthält, die dazu bestimmt sind zeitweilig den besagten Nocken (1) entgegen der Wirkung der besagten elastischen Mittel zu drücken, wenn die besagten Elemente sich nahe stehen und daß die Kontaktfläche des besagten Nockens sich auf die besagte Stützfläche des besagten zweiten Elementes stützt durch spontanes Eingreifen unter der Wirkung der besagten elastischen Mittel, nach Entweichen von den besagten Retraktionsmitteln, um besagte Elemente zu verriegeln.

3. System nach einem der Ansprüche 1 oder 2,
dadurch gekennzeichnet, daß die Verriegelungsnahstellung der besagten Elemente durch ein Anschlagssystem (31) bestimmt ist.

4. System nach einem der Ansprüche 1 bis 3,
dadurch gekennzeichnet, daß die Endstellung, welche der besagte Nocken unter der Wirkung der besagten elastischen Mittel einnimmt durch einen Anschlag (23, 24) begrenzt ist.

5. System nach einem der Ansprüche 1 bis 4,
dadurch gekennzeichnet, daß das besagte erste und zweite Element an ihren Enden, die jeweils dem besagten Nocken und der besagten Stützfläche gegenüber liegen, um eine zur Rotationsachse der besagten Nocke (1) parallelen Achse (17) angelenkt sind.

6. System nach dem Anspruch 5,
dadurch gekennzeichnet, daß das Gelenk des besagten ersten und des besagten zweiten Elementes eine nicht zerlegbare Verbindung zwischen den beiden darstellt.

7. System nach dem Anspruch 5,
dadurch gekennzeichnet, daß das Gelenk des besagten ersten und zweiten Elementes eine zerlegbare Verbindung bildet.

8. System nach irgend einem der Ansprüche 5 bis 7,
dadurch gekennzeichnet, daß das Gelenk zwischen dem besagten ersten und dem besagten zweiten Element durch eine feste mit einem der Elemente fest verbundenen Welle (17) und durch V-förmige mit dem anderen Element fest verbundenen Lagerfläche (33) gebildet wird.

9. System nach irgend einem der Ansprüche 5 bis 8,
dadurch gekennzeichnet, daß eines der Elemente fest mit der V-förmigen Stützfläche (34), die orthogonal zur Rotationsachse zwischen den besagten Elementen gerichtet ist, verbunden ist, während das andere Element einen Anschlag (19) aufweist, der sich gegen die besagten V-förmigen stützflächen abstützt, wenn die besagten Elemente sich in Annäherungsstellung befinden.

10. System nach irgend einem der Ansprüche 3 bis 9,
dadurch gekennzeichnet, daß das besagte Anschlagsystem (31, 41) dazu vorgesehen ist, mehrere verschiedene Annäherungsstellungen der beiden Elemente zu begrenzen, daß das besagte zweite Element mehrere Retraktionsmittel (39, 54) und mehrere Stützflächen (5, 5') aufweist und daß für jede Annäherungsstellung, der besagte Nocken sich mit seiner Kontaktfläche gegen eine der besagten Stützflächen lehnt.

## Claims

1. Latch system comprising two elements (10,11) linked mechanically together so as to be unable to move apart, and a cam (1) mounted so as to rotate on the first of the said elements and having a contact surface (3) pressing a bearing face (5) carried by the second of the said elements, in which system:
- the said cam can rotate about a hub (22) mounted so as to rotate on the said first element about a rotation axis (20');
- elastic means are provided in order to cause the said cam to rotate in a first direction (f₁) such that the said contact surface moves towards the said bearing face;
- means are provided enabling the said hub to be caused to rotate about the said rotation axis, in a second direction (f₂) opposite the first,
characterised:
- in that the said contact surface (3) of the said cam has, at least approximately, a profile in the form of a logarithmic spiral, whilst the said bearing face (5) is plane;
- in that the origin of the said logarithmic spiral lies on the axis of the said hub (22);
- in that the rotation axis (20') of the said hub (22) is off-centre, on the opposite side from the said contact surface of the said cam, with respect to the axis (2) of the said hub; and
- in that the said hub carries a peg (26) which is rotationally integral with it and which can drive the said cam in rotation in the said second direction (f₂), the said peg not preventing the rotation of the said cam in the said first direction under the action of the said elastic means.

2. System according to Claim 1, characterised in that the second of the said elements includes retraction means (39) intended to push back the said cam (1) momentarily, in opposition to the action of the said elastic means, when the said elements have been moved close together and in that the contact surface of the said cam bears on the said bearing face of the said second element by spontaneous snap-fastening under the action of the said elastic means, after having escaped the said retraction means, in order to latch the said elements.

3. System according to either of Claims 1 and 2, characterised in that the close-together position for latching the said elements is determined by a stop system (31).

4. System according to one of Claims 1 to 3, characterised in that the furthermost position which the said cam can assume under the action of the said elastic means is delimited by a stop (23,24).

5. System according to one of Claims 1 to 4, characterised in that the said first and second elements are articulated to each other at their ends respectively opposite the said cam and the said bearing face, about a shaft (17) parallel to the rotation axis of the said cam (1).

6. System according to Claim 5, characterised in that the articulation of the said first and second elements constitutes a non-dismantlable linkage between the latter.

7. System according to Claim 5, characterised in that the articulation of the said first and second elements forms a dismantlable linkage.

8. System according to any one of Claims 5 to 7, characterised in that the articulation between the said first and second elements is constituted by a fixed shaft (17) rigidly attached to one of the elements and by V-shaped bearing surfaces (33) integral with the other element.

9. System according to any one of Claims 5 to 8, characterised in that one of the elements is integral with V-shaped bearing surfaces (34) of direction orthogonal to the rotation axis between the said elements, whereas the other element includes a stop (19) in bearing contact against the said V-shaped bearing surfaces when the said elements are in the close-together position.

10. System according to any one of Claims 3 to 9, characterised in that the said stop system (31,41) is provided in order to delimit a plurality of different close-together positions of the two elements, in that the said second element includes a plurality of retraction means (39,54) and a plurality of separate bearing faces (5,5'), and in that, for each close-together position, the said cam is in bearing contact by its contact face against one of the said bearing faces.
